# FASCICULE DE BREVET EUROPEEN

(11) **EP 2 066 876 B1**
(45) Date de publication et mention de la délivrance du brevet: **23.03.2016**
(21) Numéro de dépôt: 07848255.1
(22) Date de dépôt: 19.09.2007
(51) Int. Cl.: F01L 9/04, F02D 41/22

(54) **SYSTEME DE COMMANDE DE SOUPAPE A DETECTION DE DEFAILLANCE**
VENTILSTEUERUNGSSYSTEM MIT FEHLFUNKTIONSERKENNUNG
VALVE CONTROL SYSTEM WITH MALFUNCTION DETECTION

(30) Priorité: 25.09.2006 FR 0608374
(43) Date de publication de la demande: 10.06.2009
(73) Titulaire: Valeo Systèmes de Contrôle Moteur, 95892 Cergy Pontoise (FR)
(72) Inventeur: GELEZ, Nicolas, 78230 Le Pecq (FR); BOUCHEZ, Boris, 78100 Saint Germain en Laye (FR)
(74) Mandataire: Rolland, Jean-Christophe
(86) Numéro de dépôt international: PCT/FR2007/001521
(87) Numéro de publication internationale: WO 2008/037871

(56) Documents cités:
- EP-A- 1 010 865
- EP-A- 1 577 544
- EP-A2- 0 915 236
- DATABASE WPI Week 199817 Derwent Publications Ltd., London, GB; AN 1998-190365 XP002437049 & JP 10 047028 A (SUZUKI KK) 17 février 1998 (1998-02-17)

## Description

La présente invention concerne un système de commande de soupapes pour un moteur thermique tel que ceux utilisés pour mouvoir les véhicules automobiles.

### ARRIERE PLAN DE L'INVENTION

Un moteur thermique comporte des cylindres définissant des chambres de combustion fermées d'un côté par une culasse et de l'autre côté par un piston qui coulisse entre des positions haute et basse et qui est relié à un vilebrequin par l'intermédiaire d'une bielle. Des conduits d'admission de combustible et d'échappement des gaz brûlés résultant de la combustion du combustible sont ménagés dans la culasse et équipés chacun d'une soupape mobile entre une position d'ouverture et une position de fermeture.

Les soupapes sont classiquement déplacées au moyen d'un arbre à came entraîné en rotation par l'intermédiaire du vilebrequin.

Il est également connu un nouveau système de commande des soupapes comportant des éléments électromagnétiques d'actionnement équipant chaque soupape pour déplacer celle-ci entre ses positions d'ouverture et de fermeture. Le système de commande comprend une unité de gestion reliée aux éléments d'actionnement pour commander ceux-ci conformément aux cycles de fonctionnement du moteur thermique. Actuellement, un dysfonctionnement de l'un des éléments d'actionnement du système de commande entraîne l'arrêt du système de commande de la même manière qu'un problème d'entraînement de l'arbre à came peut provoquer l'arrêt du moteur.

Le document EP1010865 décrit un dispositif et un procédé amenant un groupe de cylindres dans un état inopérant lorsqu'une défaillance des éléments d'actionnement des soupapes est détectée.

### OBJET DE L'INVENTION

Un but de l'invention est de fournir un moyen permettant de fiabiliser un système de commande du type précité.

### RESUME DE L'INVENTION

A cet effet, on prévoit, selon l'invention, un système de commande de soupape pour moteur comportant au moins un cylindre ayant des soupapes, le système comportant des éléments électromagnétiques d'actionnement de soupape qui sont associés à une unité de gestion commandant les éléments d'actionnement, le système comportant un organe de détection de défaillance des éléments d'actionnement et un organe d'isolement électrique de l'élément d'actionnement défaillant.

Ainsi, il est possible d'isoler l'élément d'actionnement défaillant et d'éviter que la défaillance de celui-ci entraîne un arrêt de tout le système de commande.

Selon un premier mode de mise en oeuvre pour moteur à plusieurs cylindres, ledit système de commande comporte au moins deux éléments d'actionnement par cylindre et un organe d'isolement électrique commun aux éléments d'actionnement d'au moins un cylindre.

On isole ici le cylindre affecté par la défaillance, ou un groupe de cylindres dont fait partie le cylindre défaillant, de sorte que le moteur puisse continuer à fonctionner sur le ou les cylindres restants.

Selon un deuxième mode de réalisation, chaque élément d'actionnement comprend un actionneur comportant deux électroaimants ou chaque élément d'actionnement est formé d'un électroaimant d'un actionneur destiné à déplacer une soupape.

L'isolement se porte alors soit sur l'électroaimant défaillant de l'actionneur soit sur l'actionneur comportant l'électroaimant défaillant.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique d'un moteur équipé d'un système de commande conforme à l'invention, deux modes de réalisations étant illustrés à droite et à gauche de cette figure,
- les figures 2 et 3 sont des vues schématiques partielles d'un moteur conforme respectivement à une première variante et une deuxième variante de réalisation de l'invention.

### DESCRIPTION DETAILLEE DE L'INVENTION

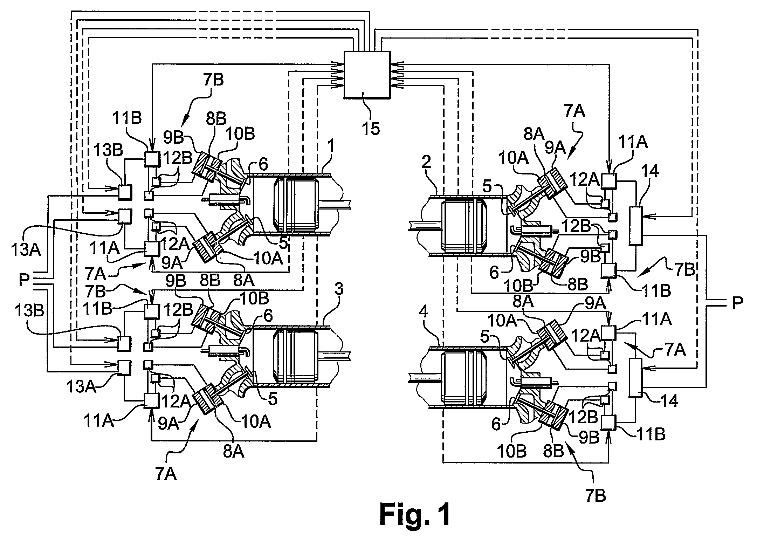

En référence à la figure 1, le moteur comprend des cylindres 1, 2, 3, 4 équipés chacun d'une soupape d'admission 5 et d'une soupape d'échappement 6. Chaque soupape 5, 6 est mobile entre une position d'ouverture et une position de fermeture du conduit qu'elle équipe. La figure est une figure schématique dans laquelle la position des soupapes et des pistons est totalement arbitraire et ne correspond pas à un cycle de fonctionnement du moteur.

Les soupapes 5, 6 sont associées chacune à un actionneur 7 identifié respectivement par les référence 7.A et 7.B sur la figure 1 (sur cette figure, les références numériques des composants représentés portent un indice A ou B selon qu'ils sont associés aux soupapes 5 ou 6 respectivement.

Chaque actionneur 7 comporte un organe d'actionnement 8 mobile entre une position extrême de fermeture de la soupape et une position extrême d'ouverture de la soupape et deux électroaimants 9, 10 pour attirer l'organe d'actionnement 8 respectivement dans sa position extrême de fermeture et dans sa position extrême d'ouverture.

Chaque actionneur 7 comprend une unité de commande 11 du fonctionnement du moteur thermique pour piloter les électroaimants 9, 10. L'unité de commande 11, qui comprend de façon connue en soi un module numérique de traitement et un module de puissance, est reliée à un réseau de puissance P et gère l'alimentation des électroaimants 9, 10 par un asservissement du courant d'alimentation de ceux-ci. L'unité de commande 11 est reliée à chaque électroaimant 9, 10 par une ligne d'alimentation sur laquelle est monté un module de contrôle de défaillance 12.

Chaque module de contrôle de défaillance 12 comprend un organe de détection de défaillance et un organe d'isolement pour isoler électriquement un électroaimant défaillant des autres électroaimants en coupant celui-ci du réseau de puissance P. L'organe de détection de défaillance est par exemple un organe de mesure de courant mis en série sur l'alimentation de l'électroaimant pour détecter un courant de crête et l'organe d'isolement est par exemple un transistor piloté par l'organe de mesure du courant pour couper l'alimentation de l'électroaimant lorsque le courant a une valeur supérieure à un seuil. La défaillance peut résulter d'un court-circuit d'un électroaimant.

Les unités de commande 11 des cylindres 1 et 3 sont reliées chacune au réseau P par un module de contrôle de défaillance 13, les unités de commande 11 du cylindre 2 sont reliées au réseau P par un module de contrôle de défaillance 14 commun et les unités de commande 11 du cylindre 4 sont également reliées au réseau P par un module de contrôle de défaillance 14 commun. Les modules de contrôle de défaillance 13 et 14 mesurent l'intensité sur le réseau P et incorporent un commutateur pour isoler du réseau P les éléments auxquels ils sont reliés.

On notera qu'on a utilisé différents modes de liaison des unités de commande 11 au réseau P (modules 12, 13 et 14) pour les besoins de l'explication de différents modes de réalisation de l'invention. En pratique, on associera tous les cylindres de la même manière avec des modules 13 et/ou des modules 14 et/ou des modules 12.

Les unités de commande 11 et les modules de contrôle de défaillance 13 et 14 sont reliés à une unité de gestion 15 de fonctionnement du moteur.

L'unité de gestion 15, ou ECU pour "Engine Control Unit", envoie des informations aux unités de commande 11 pour leur permettre de piloter les électroaimants 9, 10. Ces informations comportent des angles d'ouverture et de fermeture, un top de point mort haut... Les unités de commande 11 sont programmées pour renvoyer un certain nombre d'informations à l'unité de gestion, comme les angles d'ouverture et de fermeture réels, des températures... En outre, dans l'invention, l'unité de commande 11 est agencée également pour constituer un organe de détection de défaillance. En particulier, en cas de défaillance du capteur de position de l'organe mobile 8, le pilotage de l'actionneur 7 n'est plus possible. L'unité de commande 11 en informe alors l'unité de gestion 15 qui va commander le module de contrôle de défaillance 13, 14 correspondant pour isoler l'actionneur 7 défectueux.

Les modules de contrôle de défaillance 13, 14 détectent des anomalies dans l'énergie électrique dispensée aux actionneurs 7 et en informent l'unité de gestion 15 qui décide d'isoler électriquement ou pas les actionneurs affectés par cette anomalie en commandant les modules de contrôle de défaillance 13, 14 pour couper lesdits actionneurs du réseau P.

Les modules de contrôle de défaillance 13, 14 peuvent en outre avoir une structure identique à celle du module de contrôle de défaillance 12.

Les éléments identiques ou analogues à ceux précédemment décrits porteront une référence numérique identique dans la description qui suit de deux variantes de réalisation.

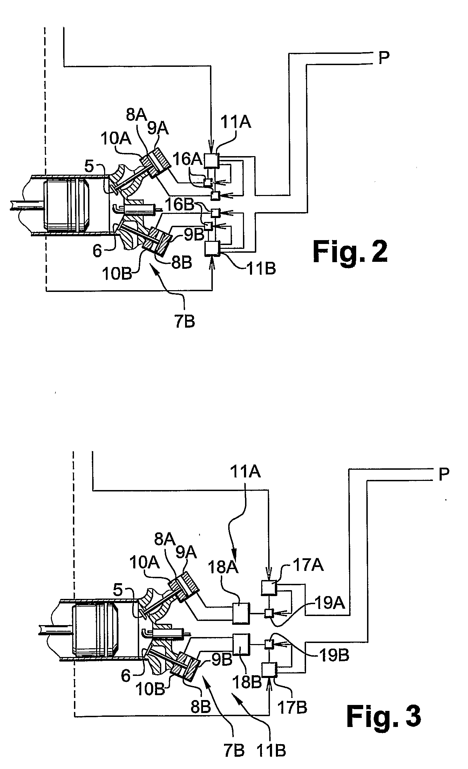

Selon une première variante, telle que représentée à la figure 2, l'unité de commande 11 est reliée à chaque électroaimant 9, 10 par une ligne d'alimentation sur laquelle est monté un organe d'isolement 16.

L'unité de commande 11 est agencée pour assurer une détection de défaillance des électroaimants et est relié aux organes d'isolement 16 pour piloter ceux-ci de manière à couper l'alimentation d'un électroaimant lorsqu'une défaillance de celui-ci est détectée. Chaque unité de commande 16 et les organes d'isolement 16 associés forment un module de contrôle de défaillance.

A la figure 3 est représentée une deuxième variante.

Chaque unité de commande 11 comprend un module de traitement 11 et un module de puissance 18 relié au module de commande 17 par un organe d'isolement 19 lui-même relié au module de commande 17. Le module de commande 17 est agencé pour piloter le module de puissance 18 et l'organe d'isolement 19 et pour détecter une défaillance du module de puissance 18.

Lorsqu'une défaillance est détectée, le module de traitement 17 commande l'organe d'isolement 19 pour couper la liaison du module de puissance 18 au réseau P.

Il est possible également de relier le module de commande 17 à l'étage du module de puissance 18 alimentant l'électroaimant 9 et l'étage du module de puissance 19 alimentant l'électroaimant 10 par des organes d'isolement pilotables individuellement par le module de traitement 17.

Le ou les organes d'isolement peuvent être également intégrés au module de puissance.

Bien entendu, l'invention n'est pas limitée au mode de réalisation décrit et on peut y apporter des variantes de réalisation sans sortir du cadre de l'invention tel que défini par les revendications.

En variante, on peut prévoir, au choix, un organe d'isolement par actionneur, un organe d'isolement commun à plusieurs actionneurs d'un même cylindre, un organe d'isolement commun à tous les actionneurs d'un même cylindre, un organe d'actionnement commun aux actionneurs de plusieurs cylindres...

Les modules d'isolement peuvent avoir toute structure permettant d'assurer une fonction d'interrupteur fusible. Les modules d'isolement sont par exemple des transistors, des relais...

## Revendications

1. Système de commande de soupape pour moteur comportant au moins un cylindre (1, 2, 3, 4) ayant des soupapes (5, 6), le système comportant des éléments électromagnétiques d' actionnement (7, 9, 10) des soupapes associés à une unité de gestion (15) commandant les éléments d'actionnement, **caractérisé en ce que** le système comporte un organe de détection de défaillance des éléments d'actionnement et un organe d'isolement électrique de l'élément d'actionnement défaillant, les éléments électromagnétiques d'actionnement (7, 9, 10) étant reliés à l'unité de gestion (15) par une unité de commande (11), reliée à un réseau de puissance P, comprenant un module numérique de traitement et un module de puissance, et
**en ce que** l'organe de détection de défaillance des éléments d'actionnement est un organe de mesure du courant mis en série sur l'alimentation de chaque élément électromagnétique d'actionnement (7, 9, 10) pour détecter un courant de crête et l'organe d'isolement électrique est un transistor ou un relais.

2. Système selon la revendication 1, pour moteur à plusieurs cylindres, le système comportant au moins deux éléments d'actionnement (7, 9, 10) par cylindre et un organe d'isolement électrique commun aux éléments d'actionnement d'au moins un cylindre.

3. Système selon la revendication 1, dans lequel l'unité de commande (11) est agencée pour former l'organe de détection de défaillance et pour commander l'organe d'isolement (16, 19).

4. Système selon la revendication 3, dans le module de traitement (17) et le module de puissance (18) sont reliés par l'organe d'isolement.

5. Système selon la revendication 1, dans lequel chaque élément d'actionnement comprend un actionneur (7) comportant deux électroaimants (9, 10).

6. Système selon la revendication 1, dans lequel chaque élément d'actionnement est formé d'un électroaimant (9, 10) d'un actionneur (7) destiné à déplacer une soupape.

## Patentansprüche

1. Ventilsteuerungssystem für Motor, der mindestens einen Zylinder (1, 2, 3, 4) aufweist, der Ventile (5, 6) hat, wobei das System elektromagnetische Betätigungselemente (7, 9, 10) der Ventile umfasst, die mit einer Managementeinheit (15) assoziiert sind, die die Betätigungselemente steuert, **dadurch gekennzeichnet, dass** das System ein Fehlfunktionserkennungsorgan der Betätigungselemente und ein Organ zum elektrischen Freischalten des versagten Betätigungselements umfasst, wobei die elektromagnetischen Betätigungselemente (7, 9, 10) mit der Managementeinheit (15) durch eine Steuereinheit (11) verbunden sind, die mit einem Leistungsnetzwerk P, das ein digitales Verarbeitungsmodul und ein Leistungsmodul umfasst, verbunden sind, und
dass das Fehlfunktionserkennungsorgan der Betätigungselemente ein Strommessorgan ist, das auf der Versorgung jedes elektromagnetischen Betätigungselements (7, 9, 10) in Serie geschaltet ist, um einen Spitzenstrom zu erkennen, und das Organ zum elektrischen Freischalten ein Transistor oder ein Relais ist.

2. System nach Anspruch 1 für Motor mit mehreren Zylindern, wobei das System mindestens zwei Betätigungselemente (7, 9, 10) pro Zylinder und ein gemeinsames Organ zum elektrischen Freischalten der Betätigungselemente mindestens eines Zylinders umfasst.

3. System nach Anspruch 1, wobei die Steuereinheit (11) eingerichtet ist, um das Fehlfunktionserkennungsorgan zu bilden und um das Freischaltorgan (16, 19) zu steuern.

4. System nach Anspruch 3, wobei das Verarbeitungsmodul (17) und das Leistungsmodul (18) durch das Freischaltorgan verbunden sind.

5. System nach Anspruch 1, wobei jedes Betätigungselement einen Aktuator (7) umfasst, der zwei Elektromagnete (9, 10) umfasst.

6. System nach Anspruch 1, wobei jedes Betätigungselement aus einem Elektromagnet (9, 10) eines Aktuators (7), der dazu bestimmt ist, ein Ventil zu bewegen, gebildet ist.

## Claims

1. System for controlling valves for an engine comprising at least one cylinder (1, 2, 3, 4) that has valves (5, 6), the system comprising electromagnetic valve-actuating elements (7, 9, 10) associated with a control unit (15) controlling the actuating elements, **characterized in that** the system comprises a failure detection member that detects failures of the actuating elements and an electrical isolating member for electrically isolating the defective actuating element, the electromagnetic actuating elements (7, 9, 10) being connected to the control unit (15) via an operating unit (11), connected to a power network P, comprising a digital processing module and a power module, and
**in that** the failure detection member that detects failures of the actuating elements is a current measuring member placed in series with the supply of power to each electromagnetic actuating element (7, 9, 10) in order to detect a peak current and the electrical isolating member is a transistor or a relay.

2. System according to Claim 1, for a multi-cylinder engine, the system comprising at least two actuating elements (7, 9, 10) per cylinder and an electrical isolating member common to the actuating elements of at least one cylinder.

3. System according to Claim 1, in which the operating unit (11) is designed to form the failure detection member and to control the isolating member (16, 19).

4. System according to Claim 3, in which the processing module (17) and the power module (18) are connected via the isolating member.

5. System according to Claim 1, in which each actuating element comprises an actuator (7) that comprises two electromagnets (9, 10).

6. System according to Claim 1, in which each actuating element is formed of an electromagnet (9, 10) of an actuator (7) intended to operate a valve.
